# EUROPÄISCHE PATENTANMELDUNG

(11) **EP 4 220 324 A1**
(43) Veröffentlichungstag der Anmeldung: **02.08.2023**
(21) Anmeldenummer: 23152244.2
(22) Anmeldetag: 18.01.2023
(51) Int. Cl.: G05B 23/02, B25F 5/00

(54) **AUTOMATISCHE VERSCHLEISSÜBERWACHUNG**

(30) Priorität: 27.01.2022 DE 102022101941
(71) Anmelder: Einhell Germany AG, 94405 Landau / Isar (DE)
(72) Erfinder: Thannhuber, Dr. Markus, 94405 Landau (DE)
(74) Vertreter: Hofstetter, Schurack & Partner

(57) **Zusammenfassung**

Gemäß einem Verfahren zur automatischen Verschleißüberwachung eines Verschleißteils (13) eines Elektrogeräts (1) wird ein Projekt oder ein Projektschritt des Projekts identifiziert. Ein Verschleißmodell wird abhängig von dem identifizierten Projekt oder Projektschritt aus einer Vielzahl vorgegebener Verschleißmodelle ausgewählt und mittels wenigstens eines Sensors des Elektrogeräts (1) wird wenigstens eine vorgegebene Betriebskenngröße des Elektrogeräts (1) bestimmt. Mittels wenigstens einer Recheneinheit (4) des Elektrogeräts (1) wird abhängig von der bestimmten wenigstens einen Betriebskenngröße und dem ausgewählten Verschleißmodell ein aktueller Verschleißgrad und/oder eine voraussichtliche Restlebensdauer des Verschleißteils (13) bestimmt.

## Beschreibung

Die vorliegende Erfindung betrifft ein Verfahren und ein System zur automatischen Verschleißüberwachung eines Verschleißteils eines Elektrogeräts.

In Elektrogeräten, insbesondere Elektrowerkzeuge, werden häufig Verschleißteile eingesetzt, etwa Schneidwerkzeuge wie Bohrer oder Sägeblätter, Schraubbits, Schleifmittel und so weiter. Zu stark abgenutzte Verschleißteile können die Qualität der Arbeitsergebnisse beeinträchtigen und/oder gegebenenfalls ein Sicherheitsrisiko darstellen.

Es ist eine Aufgabe der vorliegenden Erfindung, eine Möglichkeit zur automatischen Verschleißüberwachung eines Verschleißteils eines Elektrogeräts anzugeben.

Diese Aufgabe wird durch den jeweiligen Gegenstand der unabhängigen Ansprüche gelöst. Vorteilhafte Weiterbildungen und bevorzugte Ausführungsformen sind Gegenstand der abhängigen Ansprüche.

Die Erfindung beruht auf der Idee, ein wenigstens teilweise unter Verwendung des Elektrogeräts durchzuführendes Projekt oder einen Projektschritt des Projekts zu identifizieren und basierend darauf ein Verschleißmodell auszuwählen, das zum Bestimmen eines aktuellen Verschleißgrads und/oder einer voraussichtlichen Restlebensdauer des Verschleißteils verwendet wird.

Gemäß einem Aspekt der Erfindung wird ein Verfahren zur automatischen Verschleißüberwachung eines Verschleißteils eines Elektrogeräts angegeben. Dabei wird mittels des Elektrogeräts wenigstens teilweise auszuführendes Projekt oder ein Projektschritt des Projekts identifiziert, beispielsweise mittels wenigstens einer Recheneinheit des Elektrogeräts und/oder mittels einer externen Recheneinheit. Ein Verschleißmodell wird abhängig von dem identifizierten Projekt oder Projektschritt aus einer Vielzahl vorgegebener Verschleißmodelle ausgewählt, beispielsweise mittels der wenigstens einen Recheneinheit des Elektrogeräts und/oder mittels der externen Recheneinheit. Mittels wenigstens eines Sensors des Elektrogeräts wird wenigstens eine vorgegebene Betriebskenngröße des Elektrogeräts bestimmt. Mittels der wenigstens einen Recheneinheit des Elektrogeräts wird abhängig von der bestimmten wenigstens einen Betriebskenngröße und dem ausgewählten Verschleißmodell ein aktueller Verschleißgrad und/oder eine voraussichtliche Restlebensdauer des Verschleißteils bestimmt.

Das Elektrogerät ist insbesondere als Elektrowerkzeug ausgestaltet. Das Elektrogerät kann beispielsweise ein akkubetriebenes Elektrogerät sein, das ein Akkupack zur Energieversorgung des Elektrogeräts aufweist. Das Akkupack kann also als Teil des Elektrogeräts aufgefasst werden, auch wenn es beispielsweise als Wechsel-Akkupack ausgestaltet ist.

Das Akkupack ist mit einem Gehäuse des Elektrogeräts mechanisch und elektrisch verbindbar. Beispielsweise kann das Akkupack, insbesondere zerstörungsfrei lösbar, mit dem Gehäuse des Elektrogeräts verbunden werden, beispielsweise über eine Rastverbindung, eine Steckverbindung und/oder eine Klemmverbindung. Insbesondere kann die mechanische Verbindung des Akkupacks mit dem Gehäuse des Elektrogeräts als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Elektrogeräts jeweilige Schnittstellen aufweisen. Das Akkupack kann jedoch als Teil des Elektrogeräts aufgefasst werden.

Zur Energieversorgung des Elektrogeräts weist das Akkupack wenigstens eine Akkumulatorzelle auf, vorzugsweise mehrere in Reihe und/oder parallel verschaltete Akkumulatorzellen. Eine elektrische Verbindung der wenigstens einen Akkumulatorzelle mit einem Verbraucher des Elektrogeräts, beispielsweise einem Motor des Elektrogeräts, kann über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen.

Das Projekt ist insbesondere durch eine Sequenz oder eine Vielzahl von Projektschritten spezifiziert, wobei wenigstens ein Teil der Projektschritte unter Verwendung des Elektrogeräts durchgeführt werden kann. Ein Projektschritt kann dabei eine oder mehrere Tätigkeiten, die durch den Benutzer durchzuführen sind, umfassen. Insbesondere kann der identifizierte Projektschritt unter Verwendung des Elektrogeräts durchgeführt werden. Es ist möglich aber nicht notwendigerweise erforderlich, dass das Elektrogerät in mehreren oder allen Projektschritten verwendet wird oder verwendet werden kann. Dementsprechend können Projektdaten auf dem Elektrogerät oder einer externen Recheneinheit gespeichert sein, die Informationen zu den Projekten oder Projektschritten enthalten, insbesondere das Verschleißmodell.

Möglicherweise können in dem Projekt auch in mehrere Elektrogeräte und/oder mehrere Akkupacks eingesetzt werden, wobei die Elektrogeräte und/oder mehrere Akkupacks untereinander synchronisiert werden können.

Das Verschleißmodell ist insbesondere dem Projekt oder dem identifizierten Projektschritt zugeordnet. Insbesondere kann das Verschleißmodell dem Elektrogerät, beispielsweise dem konkreten Elektrogerät, einer Kategorie oder einem Typ des Elektrogeräts, und/oder dem Verschleißteil, beispielsweise einer Kategorie oder einem Typ des Verschleißteils, zugeordnet sein. Das Projekt oder der identifizierte Projektschritt kann wiederum, implizit oder explizit, dem Elektrogerät und/oder dem Verschleißteil zugeordnet sein. Durch das Identifizieren des Projekts oder Projektschritts kann also festgestellt werden, welches Verschleißmodell aus der Vielzahl vorgegebener Verschleißmodelle geeignet oder am besten geeignet ist, um den aktuellen Verschleißgrad oder die voraussichtliche Restlebensdauer des Verschleißteils zu bestimmen. Dies kann automatisch durch das Elektrogerät selbst, insbesondere wenigstens eine Recheneinheit des Elektrogeräts, oder die externe Recheneinheit erfolgen.

Dementsprechend muss nicht über eine eigene Sensorik oder eine, gegebenenfalls unzuverlässige, Benutzerrückmeldung das Verschleißteil bestimmt werden und dennoch kann das optimal passende Verschleißmodell ausgewählt werden.

Die Projektschritte des Projekts weisen beispielsweise eine definierte Reihenfolge auf, die anhand der Projektdaten bestimmbar ist. Die Reihenfolge ist beispielsweise erforderlich oder vorteilhaft, um das gewünschte Projekt durchführen zu können. Folglich ist auch für die Projektschritte der Vielzahl von Projektschritten eine Reihenfolge definiert und anhand der Projektdaten bestimmbar, auch wenn die Projektschritte der Vielzahl von Projektschritten gemäß der Reihenfolge nicht notwendigerweise aufeinanderfolgen.

Das Projekt kann aber auch Projektschritte enthalten, die nicht notwendigerweise gemäß einer vorgegebenen Abfolge abgearbeitet werden müssen. Beispielsweise könnten mehrere Schrauben derart appliziert werden, dass zunächst mehrere Löcher gebohrt werden und danach erst die Schrauben gesetzt werden oder es könnte jeweils ein Loch gebohrt werden, die zugehörige Schraube gesetzt werden, das nächste Loch gebohrt werden und so weiter.

Der aktuelle Projektschritt kann insbesondere anhand eines aktuellen Projektstatus bestimmt werden. Dieser entspricht der Information, welche Projektschritte bereits vergangen oder erledigt sind, beziehungsweise welche noch bevorstehen oder beziehungsweise welcher gerade durchgeführt wird. Diese Information kann die wenigstens eine Recheneinheit beispielsweise basierend auf einem vorgegebenen Zeitplan, basierend auf einer Benutzereingabe oder auf Messungen von Betriebsparametern des Elektrogeräts bestimmen. Alternativ kann die wenigstens eine Recheneinheit den Projektstatus von der externen Recheneinheit erhalten. Die externe Recheneinheit kann insbesondere als extern zu dem Elektrogerät verstanden werden.

Die Projektdaten können auf einem Datenspeicher des Elektrogeräts, beispielsweise des Akkupacks oder der wenigstens einen Recheneinheit, gespeichert sein. Beispielsweise können die Projektdaten auf einem externen Datenträger bereitgestellt und auf den Datenspeicher des Elektrogeräts übertragen werden. Alternativ können die Projektdaten beispielsweise auch von einem externen elektronischen Gerät, beispielsweise der externen Recheneinheit oder einem mobilen elektronischen Endgerät über eine drahtlose Kommunikationsvorrichtung auf das Elektrogerät und insbesondere den Datenspeicher des Elektrogeräts übertragen werden.

Alternativ können die Projektdaten auf einem externen Datenspeicher gespeichert sein, beispielsweise auf einem Datenspeicher der externen Recheneinheit. Die wenigstens eine Recheneinheit kann dann, beispielsweise mittels drahtloser Kommunikation, den dem aktuellen Projektschritt zugeordneten Wert für den Geräteparameter von dem externen Datenspeicher erhalten.

Die wenigstens eine Recheneinheit kann vollständig Teil des Akkupacks sein oder als Teil des Elektrogeräts, jedoch vollständig außerhalb des Akkupacks, insbesondere in dem Gehäuse des Elektrogeräts, vorgesehen sein. In diesen Fällen kann die wenigstens eine Recheneinheit aus genau einer oder aus mehreren Recheneinheit bestehen.

In alternativen Ausführungsformen beinhaltet die wenigstens eine Recheneinheit zwei oder mehr Recheneinheiten, wobei eine erste Recheneinheit der zwei oder mehr Recheneinheiten Teil des Akkupacks ist und eine zweite Recheneinheit der zwei oder mehr Recheneinheiten Teil des Elektrogeräts, aber nicht Teil des Akkupacks ist. Die erste und die zweite Recheneinheit können dann unterschiedliche Verfahrensschritte des erfindungsgemäßen Verfahrens durchführen, die bezüglich der wenigstens einen Recheneinheit hier und im Folgenden erläutert werden. Dabei können die erste und die zweite Recheneinheit in einer Kommunikationsverbindung miteinander stehen, insbesondere wenn das Akkupack mit dem Gehäuse des Elektrogeräts verbunden ist. Die Kommunikationsverbindung kann dabei drahtlos oder drahtgebunden ausgestaltet sein. Beispielsweise kann die Kommunikationsverbindung gemäß spezifizierten Regeln zum seriellen Datenaustausch ausgestaltet sein, beispielsweise gemäß UART (Englisch: "Universal Asynchronous Receiver / Transmitter") oder gemäß 12C (Englisch: "Inter-Integrated Circuit"). Besonders die Ausgestaltung gemäß UART ist aufgrund der geringen Komplexität und aufgrund dessen, dass zum Datenaustausch lediglich zwei Kommunikationsleitungen erforderlich sind, besonders vorteilhaft.

Die bestimmte wenigstens eine Betriebskenngröße, kann als Eingabe für das ausgewählte Verschleißmodell verwendet werden und/oder mit einem oder mehreren Schwellwerten, die durch das Verschleißmodell definiert sind, verglichen werden, um die voraussichtliche Restlebensdauer und/oder den aktuellen Verschleißgrad zu bestimmen. In einem besonders einfachen Beispiel könnte das Verschleißmodell beispielsweise den Verschleißgrad oder die Restlebensdauer als Funktion einer Betriebskenngröße beinhalten. Der entsprechende Zusammenhang hängt dabei insbesondere von dem Verschleißteil ab, also beispielsweise von der Kategorie oder der Art des Verschleißteils. Mit anderen Worten hat ein bestimmter Verschleißgrad eines Bohrers einer Bohrmaschine beispielsweise einen anderen Einfluss auf einen Betriebsstrom oder eine Leistungsaufnahme, als dies für ein Sägeblatt einer Stichsäge der Fall wäre. Im Allgemeinen kann das Verschleißmodell jedoch auch komplexer sein und insbesondere mehrere Eingangsgrößen berücksichtigen. Gegebenenfalls kann die wenigstens eine Betriebskenngröße auch über einen bestimmten Zeitraum hinweg überwacht beziehungsweise wiederholt oder kontinuierlich bestimmt werden. Abhängig davon kann dann basierend auf dem Verschleißmodell der Verschleißgrad und/oder die Restlebensdauer bestimmt werden. Hierzu kann beispielsweise berücksichtigt werden, ob sich ein bestimmter Trend des wenigstens einen Betriebsparameters abzeichnet und/oder die Werte für den wenigstens einen Betriebsparameter können gemittelt werden und so weiter.

Der wenigstens eine Sensor kann beispielsweise wenigstens einen Stromsensor, wenigstens einen Spannungssensor, wenigstens einen Temperatursensor und so weiter beinhalten. Dementsprechend kann die wenigstens eine Betriebskenngröße einen Strom, eine Leistungsabgabe, eine Spannung und/oder eine Temperatur des Elektrogeräts betreffen. Insbesondere kann die wenigstens eine Betriebskenngröße basierend auf dem Strom, der Leistungsabgabe, der Spannung und/oder der Temperatur bestimmt oder berechnet werden.

Gemäß zumindest einer Ausführungsform ist die Vielzahl vorgegebener Verschleißmodelle auf einem Speicherelement des Elektrogeräts gespeichert und das Verschleißmodell wird mittels der wenigstens einen Recheneinheit des Elektrogeräts abhängig von dem identifizierten Projekt oder Projektschritt aus der gespeicherten Vielzahl vorgegebener Verschleißmodelle ausgewählt.

In alternativen Ausführungsformen ist die Vielzahl vorgegebener Verschleißmodelle auf einem Speicherelement der externen Recheneinheit gespeichert. Das Verschleißmodell wird von der externen Recheneinheit abhängig von dem identifizierten Projekt oder Projektschritt aus der gespeicherten Vielzahl vorgegebener Verschleißmodelle ausgewählt. Das ausgewählte Verschleißmodell wird drahtgebunden oder drahtlos von der externen Recheneinheit an die wenigstens eine Recheneinheit des Elektrogeräts übermittelt und auf dem Speicherelement des Elektrogeräts gespeichert.

Solche Ausführungsformen haben insbesondere den Vorteil, dass die Vielzahl von Verschleißmodellen aktualisiert, erweitert, ergänzt oder verfeinert werden kann, ohne dass dazu auf das Elektrogerät zugegriffen werden muss. Auch die Speicherkapazität des Speicherelements des Elektrogeräts kann entsprechend klein gewählt werden.

Gemäß zumindest einer Ausführungsform wird abhängig von dem identifizierten Projekt oder Projektschritt das Verschleißteil und/oder eine Eigenschaft des Verschleißteils bestimmt und das Verschleißmodell wird abhängig von dem bestimmten Verschleißteil und/oder der bestimmten Eigenschaft des Verschleißteils ausgewählt.

Es kann also bei der Auswahl insbesondere berücksichtigt werden, um welche Art von Verschleißteil es sich handelt und gegebenenfalls können Materialparameter, Abmessungen oder sonstige Eigenschaften des Verschleißteils bei der Auswahl des Verschleißmodells berücksichtigt werden, um so eine möglichst gute Vorhersage der Restlebensdauer oder des Verschleißgrads zu ermöglichen.

Gemäß zumindest einer Ausführungsform wird ein erwarteter Betriebsparameter des Elektrogeräts bei der Durchführung des Projekts oder Projektschritts bestimmt, beispielsweise basierend auf den Projektdaten, und das Verschleißmodell wird abhängig von dem bestimmten erwarteten Betriebsparameter ausgewählt.

Die Projektdaten können also insbesondere Informationen dahingehend beinhalten, in welcher Art und Weise das Elektrogerät während des Projekts oder Projektschritts voraussichtlich verwendet wird, beispielsweise welche Drehzahlen, welche Vorschubgeschwindigkeiten, welche Drehmomente und so weiter abhängig von dem Projekt voraussichtlich eingesetzt werden. Diese Information kann dazu genutzt werden, das Verschleißmodell optimal auszuwählen, da beispielsweise der Zusammenhang zwischen der Betriebskenngröße und dem Verschleißgrad beziehungsweise der Restlebensdauer davon beeinflusst werden kann.

Gemäß zumindest einer Ausführungsform wird ein zu bearbeitendes Material und/oder ein Materialparameter des zu bearbeitenden Materials abhängig von dem identifizierten Projekt oder Projektschritt, insbesondere basierend auf den Projektdaten, bestimmt und das Verschleißmodell wird abhängig von dem bestimmten Material und/oder dem bestimmten Materialparameter ausgewählt.

Die Projektdaten können also die Informationen bezüglich des Materials oder des Materialparameters beinhalten. Diese Informationen können ebenfalls zur optimalen Auswahl des Verschleißmodells verwendet werden, da das Material oder der Materialparameter eine Auswirkung auf den Zusammenhang zwischen dem Betriebsparameter und der Restlebensdauer beziehungsweise dem Verschleißgrad haben kann.

Gemäß zumindest einer Ausführungsform wird abhängig von dem aktuellen Verschleißgrad und/oder der voraussichtlichen Restlebensdauer mittels einer Ausgabeeinheit der externen Recheneinheit, insbesondere angesteuert durch die wenigstens eine Recheneinheit, ein akustischer und/oder visueller Hinweis an einen Benutzer ausgegeben.

Gemäß zumindest einer Ausführungsform wird abhängig von dem aktuellen Verschleißgrad und/oder der voraussichtlichen Restlebensdauer mittels einer Ausgabeeinheit des Elektrogeräts, insbesondere angesteuert durch die wenigstens eine Recheneinheit, ein akustischer, visueller und/oder haptischer Hinweis an einen Benutzer des Elektrogeräts ausgegeben.

Insbesondere kann die wenigstens eine Recheneinheit den aktuellen Verschleißgrad und/oder die voraussichtliche Restlebensdauer mit einem oder mehreren vorgegebenen Schwellwerten vergleichen und den Hinweis ausgeben, wenn die Restlebensdauer kleiner ist als ein entsprechender Schwellwert und/oder der Verschleißgrad größer ist als ein entsprechender weiterer Schwellwert. Der Benutzer kann so darauf hinwiesen werden, dass das Verschleißteil gewechselt werden sollte.

Alternativ oder zusätzlich zu dem akustischen, visuellen und/oder haptischen Hinweis, der mittels der Ausgabeeinheit des Elektrogeräts ausgegeben wird, kann abhängig von der bestimmten Restlebensdauer und/oder dem bestimmten aktuellen Verschleißgrad eine Mitteilung an ein externes mobiles elektronisches Gerät, beispielsweise ein Smartphone, einen Webbrowser oder ein Benutzerkonto des Benutzers übermittelt werden, um den Benutzer auf den fortgeschrittenen Verschleiß oder dergleichen hinzuweisen.

Gemäß zumindest einer Ausführungsform wird eine Funktion des Elektrogeräts abhängig von dem aktuellen Verschleißgrad und/oder der voraussichtlichen Restlebensdauer automatisch deaktiviert oder eingeschränkt, insbesondere mittels der wenigstens einen Recheneinheit.

Beispielsweise kann bei fortgeschrittenem Verschleiß eine maximale Motordrehzahl, ein maximales Motordrehmoment, ein maximaler Betriebsstrom und so weiter reduziert werden oder der Betrieb des Elektrogeräts kann vollständig unterbunden werden.

Gemäß zumindest einer Ausführungsform betrifft die Betriebskenngröße einen Betriebsstrom, eine Betriebsspannung und/oder eine Leistungsabgabe einer Energiequelle des Elektrogeräts, insbesondere des Akkupacks, beispielsweise an einen elektrischen Verbraucher des Elektrogeräts, etwa einen Motor.

Dementsprechend kann der wenigstens eine Sensor des Elektrogeräts wenigstens einen Strom- und/oder Spannungssensor enthalten.

Die Betriebskenngröße kann beispielsweise eine Stromaufnahme, eine Stromkennlinie, Stromripples, eine Leistungsaufnahme, Leistungsripples, einen Spannungsabfall oder Spannungsripples beinhalten oder spezifizieren.

Gemäß zumindest einer Ausführungsform betrifft die Betriebskenngröße eine Energiemenge, welche zur Durchführung des Projektschritts von der Energiequelle abgegeben wurde, insbesondere an den elektrischen Verbraucher.

Je mehr Energie für die Durchführung des Projektschritts erforderlich war, desto höher ist gegebenenfalls der Verschleißgrad.

Alternativ oder zusätzlich kann der wenigstens eine Sensor auch dazu eingerichtet sein, eine Arbeits- oder Bearbeitungszeit für einen mittels des Elektrogeräts und des Verschleißteils ausgeführten Vorgang zu bestimmen. Die Arbeits- oder Bearbeitungszeit kann ebenfalls als Betriebskenngröße berücksichtigt werden.

Je stärker die Abnutzung beziehungsweise der Verschleiß des Verschleißteils ist, desto größer kann beispielsweise die erforderliche Arbeits- oder Bearbeitungszeit bei ansonsten gegebenen Bedingungen und Parametern sein, sodass sich daraus ebenfalls Rückschlüsse auf den Verschleißgrad oder die Restlebensdauer ziehen lassen.

Gemäß zumindest einer Ausführungsform wird eine Benutzereingabe erfasst und das Projekt oder der Projektschritt wird zumindest teilweise abhängig von der Benutzereingabe identifiziert.

Die Benutzereingabe kann dabei insbesondere durch ein Eingabeelement des Elektrogeräts, das mit der wenigstens einen Recheneinheit verbunden ist, erfasst werden. Alternativ oder zusätzlich kann die Benutzereingabe auch an einem externen elektronischen Gerät, beispielsweise einem externen elektronischen mobilen Endgerät, wie etwa einem Smartphone oder Tablet-Computer, oder über eine Cloud erfolgen und die wenigstens eine Recheneinheit erhält eine Information über die Benutzereingabe über die Kommunikationsverbindung mit dem externen elektronischen Gerät.

Auf diese Weise kann der Benutzer der wenigstens einen Recheneinheit also über die Benutzereingabe die Informationen zur Verfügung stellen, was der aktuelle Projektschritt ist oder dass der vorherige Projektschritt nun abgeschlossen ist.

Insbesondere kann zum Erfassen der Benutzereingabe eine Benutzerinteraktion des Benutzers mit dem Eingabegerät des Elektrogeräts detektiert werden. Gegebenenfalls kann die wenigstens eine Recheneinheit die Benutzereingabe basierend auf der erfassten Benutzerinteraktion erkennen.

Die Benutzerinteraktion kann beispielsweise als Einwirkung des Benutzers auf das Eingabegerät verstanden werden. Dabei kann das Eingabegerät beispielsweise einen mechanischen Schalter oder Taster, ein berührungsempfindliches Eingabeelement und/oder ein Mikrofon zum Erfassen der Benutzerinteraktion aufweisen.

Im Falle eines Schalters oder Tasters wirkt der Benutzer auf das Eingabegerät ein, indem er den Schalter oder Taster drückt oder betätigt. Im Falle eines berührungsempfindlichen Eingabeelements, beispielsweise eines Touchdisplays oder eines sonstigen Bereichs zur Berührungserkennung wirkt der Benutzer auf das Eingabegerät ein, indem er dieses berührt. Im Falle eines Mikrofons kann der Benutzer auf das Eingabegerät einwirken, indem er selbst einen Sprachbefehl oder eine Spracheingabe an das Mikrofon abgibt.

Die Verwendung eines Mikrofons zum Erfassen der Benutzerinteraktion ist besonders vorteilhaft, da der Benutzer dann gegebenenfalls von seiner aktuellen Tätigkeit oder Körperhaltung nicht abweichen muss, um die Benutzereingabe zu tätigen. Der Benutzer kann also beispielsweise vordefinierte Sprachbefehle, wie beispielsweise "weiter" oder "nächster Schritt" formulieren, um die wenigstens eine Recheneinheit zu informieren.

Ferner kann der Benutzer die wenigstens eine Recheneinheit durch die Einwirkung auf das Eingabegerät dazu veranlassen, dass der aktuelle Projektschritt auf einen vorherigen, also insbesondere scheinbar bereits abgeschlossenen, Projektschritt gesetzt wird, und so weiter. Hierzu können verschiedene Eingabegeräte oder verschiedene Sprachbefehle für unterschiedliche Zwecke vorgesehen sein.

Insbesondere ist also auch ein Rücksprung in einen vorherigen Projektschritt möglich, beispielsweise ausgelöst durch einen Sprachbefehl "zurück" oder dergleichen des Benutzers. Auch ein Wiederholen des jeweiligen Projektschritts ist denkbar.

In manchen Ausführungsformen kann die wenigstens eine Recheneinheit den Benutzer über einen Lautsprecher des Elektrogeräts, gegebenenfalls unter Verwendung eines Sprachsyntheseschaltkreises der wenigstens einen Steuereinheit und/oder basierend auf gespeicherten Audiodateien, durch eine sprachliche Aufforderung zu der Benutzereingabe auffordern.

Beispielsweise kann das Elektrogerät, insbesondere das Akkupack, eine Kommunikationsschnittstelle zur drahtlosen Kommunikation mit der externen Recheneinheit aufweisen. Die Kommunikationsschnittstelle kann insbesondere zur drahtlosen Kommunikation über ein Funknetzwerk eingerichtet sein, beispielsweise über ein Mobilfunknetz oder ein Niedrigenergieweitverkehrnetz, LPWAN (englisch: "Low Power Wide Area Network"), insbesondere ein NB-IoT-Netzwerk (englisch: "Narrow-Band Internet of Things"). Das Funknetz kann insbesondere gemäß GSM, UMTS, LTE, 5G, 6G et cetera oder NB-IoT ausgestaltet sein. Ferner sind auch nichtzellbasierte Ansätze wie etwa LoRa oder ZigBee möglich.

Gemäß zumindest einer Ausführungsform erhält die wenigstens eine Recheneinheit, insbesondere über die Kommunikationsschnittstelle, ein Eingabesignal von der externen Recheneinheit und detektiert die Benutzereingabe basierend auf dem Eingabesignal.

Die Benutzereingabe kann daher an der externen Recheneinheit vorgenommen werden, beispielsweise an einem mobilen elektronischen Endgerät wie etwa einem Smartphone, einem Laptopcomputer oder einem Tabletcomputer. Hierzu kann beispielsweise eine entsprechende Applikation auf der externen Recheneinheit zum Erfassen der Benutzereingabe implementiert werden oder die Eingabe kann über einen Browser oder einen entsprechenden Webserver an die wenigstens eine Recheneinheit übermittelt werden.

Somit kann die Benutzereingabe auch getätigt werden und der aktuelle Projektschritt dementsprechend auch abhängig von der Benutzereingabe bestimmt werden, wenn sich das Elektrogerät gerade nicht in Reichweite des Benutzers befindet, sodass er eine mechanische Taste an dem Akkupack nicht ohne einen Standortwechsel betätigen könnte beziehungsweise eine Spracheingabe über das Mikrofon nicht ohne Standortwechsel durchführen kann.

Gemäß zumindest einer Ausführungsform erhält die wenigstens eine Recheneinheit mittels drahtloser Kommunikation eine Statusinformation, insbesondere von der externen Recheneinheit, und identifiziert das Projekt oder den Projektschritt zumindest teilweise abhängig von der Statusinformation.

Dementsprechend kann die externe Recheneinheit basierend auf einer Benutzereingabe oder sonstigen Informationen selbst die Statusinformation erzeugen und dem Elektrogerät wie beschrieben bereitstellen.

Gemäß zumindest einer Ausführungsform wird ein Betriebsstrom zum Betrieb eines Verbrauchers, insbesondere des Elektromotors, des Elektrogeräts und/oder eine Betriebsspannung zum Betrieb des Verbrauchers und/oder eine Leistungsabgabe einer Energiequelle an den Verbraucher überwacht und der aktuelle Projektschritt wird zumindest teilweise abhängig von einem Ergebnis der Überwachung bestimmt.

Beispielsweise kann die wenigstens eine Recheneinheit den Betriebsstrom und/oder die Betriebsspannung und/oder die Leitungsabgabe steuern oder regeln, um dem Elektrogerät beziehungsweise dem Verbraucher elektrische Leistung bereitzustellen.

Durch die Überwachung des Betriebsstroms und/oder der Betriebsspannung und eine entsprechende Rückkopplung in dem zeitlichen Verlauf des Betriebsstroms und/oder der Betriebsspannung von dem Elektrogerät oder dem Elektromotor, die sich beispielsweise in Form sogenannter Ripples ausdrückt, kann die wenigstens eine Recheneinheit Informationen über einen Verlauf der Motorbewegung, beispielsweise einer Anzahl von Umdrehungen, eines Drehmoments des Elektromotors und so weiter, ziehen. Auf diese Weise kann die wenigstens eine Recheneinheit Informationen darüber erhalten, welche Tätigkeit beziehungsweise in welcher Häufigkeit oder Form eine bestimmte Tätigkeit durch das Elektrogerät durchgeführt wurde. Entsprechende Informationen zum Abgleich können in den Projektdaten hinterlegt sein.

Auf diese Weise kann die wenigstens eine Recheneinheit jedenfalls zum Teil den Projektstatus abschätzen, ohne auf eine Benutzereingabe angewiesen zu sein.

Gemäß zumindest einer Ausführungsform erhält die wenigstens eine Recheneinheit die Projektdaten, insbesondere über die Kommunikationsschnittstelle, von der externen Recheneinheit, insbesondere über das Mobilfunknetz oder das LPWAN, und speichert diese auf dem Datenspeicher.

Mit anderen Worten kann ein Projektplan in Form der Projektdaten auf diese Weise über den Cloudserver, einen Webbrowser und einen entsprechenden Webserver, ein mobiles elektronisches Endgerät oder dergleichen in drahtloser Weise dem Elektrogerät zur Verfügung gestellt werden.

Beispielsweise können auf dem Elektrogerät beziehungsweise dem Datenspeicher auch verschiedene Sätze von Projektschritten gespeichert sein und je nachdem, welches Projekt aktuell ausgeführt werden soll, können die entsprechenden Projektdaten genutzt werden. Die Auswahl des Projekts kann beispielsweise ebenfalls durch eine Benutzereingabe, insbesondere einen Sprachbefehl, erfolgen.

Gemäß einem weiteren Aspekt der Erfindung wird ein System zur automatischen Verschleißüberwachung eines Verschleißteils für ein Elektrogerät angegeben, wobei das System das Elektrogerät enthält oder das System aus dem Elektrogerät besteht. Das System weist wenigstens eine Recheneinheit auf, die dazu eingerichtet ist, ein mittels des Elektrogeräts und des Verschleißteils auszuführendes Projekt oder einen Projektschritt des Projekts zu identifizieren und ein Verschleißmodell abhängig von dem identifizierten Projekt oder Projektschritt aus einer Vielzahl vorgegebener Verschleißmodelle auszuwählen. Das Elektrogerät weist wenigstens einen Sensor zum Bestimmen wenigstens einer vorgegebenen Betriebskenngröße des Elektrogeräts auf und die wenigstens eine Recheneinheit ist dazu eingerichtet, abhängig von der bestimmten Betriebskenngröße und dem ausgewählten Verschleißmodell einen aktuellen Verschleißgrad und/oder eine voraussichtliche Restlebensdauer des Verschleißteils zu bestimmen.

Gemäß zumindest einer Ausführungsform des Systems weist das Elektrogerät ein Speicherelement auf, das die Vielzahl vorgegebener Verschleißmodelle speichert das das Elektrogerät weist die wenigstens eine Recheneinheit auf.

In solchen Ausführungsformen kann das System insbesondere aus dem Elektrogerät bestehen.

Gemäß zumindest einer Ausführungsform des Systems weist das System eine zu dem Elektrogerät externe Recheneinheit auf, die dazu eingerichtet ist, das Verschleißmodell abhängig von dem identifizierten Projekt oder Projektschritt aus der gespeicherten Vielzahl vorgegebener Verschleißmodelle auszuwählen. Die externe Recheneinheit ist dazu eingerichtet, das ausgewählte Verschleißmodell drahtgebunden oder drahtlos an wenigstens eine Recheneinheit des Elektrogeräts zu übermitteln und die wenigstens eine Recheneinheit des Elektrogeräts ist dazu eingerichtet, das übermittelte ausgewählte Verschleißmodell auf einem Speicherelement des Elektrogeräts zu speichern.

In solchen Ausführungsformen beinhaltet die wenigstens eine Recheneinheit des Systems also die wenigstens eine Recheneinheit des Elektrogeräts sowie die externe Recheneinheit. Das System kann beispielsweise aus dem Elektrogerät und der externen Recheneinheit bestehen.

Das Elektrogerät ist insbesondere als Elektrowerkzeug ausgebildet, beispielsweise als Akkuschrauber, Bohrmaschine, Bohrhammer, Kappsäge, Tauchsäge, Kreissäge, Stichsäge und so weiter, und/oder als Gartengerät.

Weitere Ausführungsformen des erfindungsgemäßen Systems folgen unmittelbar aus den verschiedenen Ausgestaltungen des erfindungsgemäßen Verfahrens und umgekehrt. Insbesondere lassen sich einzelne Merkmale und entsprechende Erläuterungen bezüglich der verschiedenen Ausführungsformen zu dem erfindungsgemäßen Verfahren analog auf entsprechende Ausführungsformen des erfindungsgemäßen Systems übertragen. Insbesondere ist das erfindungsgemäße System zum Durchführen eines erfindungsgemäßen Verfahrens ausgebildet oder programmiert. Insbesondere führt das erfindungsgemäße System das erfindungsgemäße Verfahren durch.

Unter einer Recheneinheit kann insbesondere ein Datenverarbeitungsgerät verstanden werden, die einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen. Die wenigstens eine Recheneinheit des Elektrogeräts kann insbesondere auch Funktionen eines Treibers, einer Steuerung und/oder eines Batteriemanagementsystems und so weiter implementieren.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer Festwertspeicher, EPROM (englisch: "erasable read-only memory"), als elektrisch löschbarer Festwertspeicher, EEPROM (englisch: "electrically erasable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen
- Fig. 1: eine schematische Darstellung eines Elektrogeräts einer beispielhaften Ausführungsform eines erfindungsgemäßen Systems; und
- Fig. 2: eine schematische Blockdarstellung eines Akkupacks einer weiteren beispielhaften Ausführungsform eines Elektrogeräts eines erfindungsgemäßen Systems.

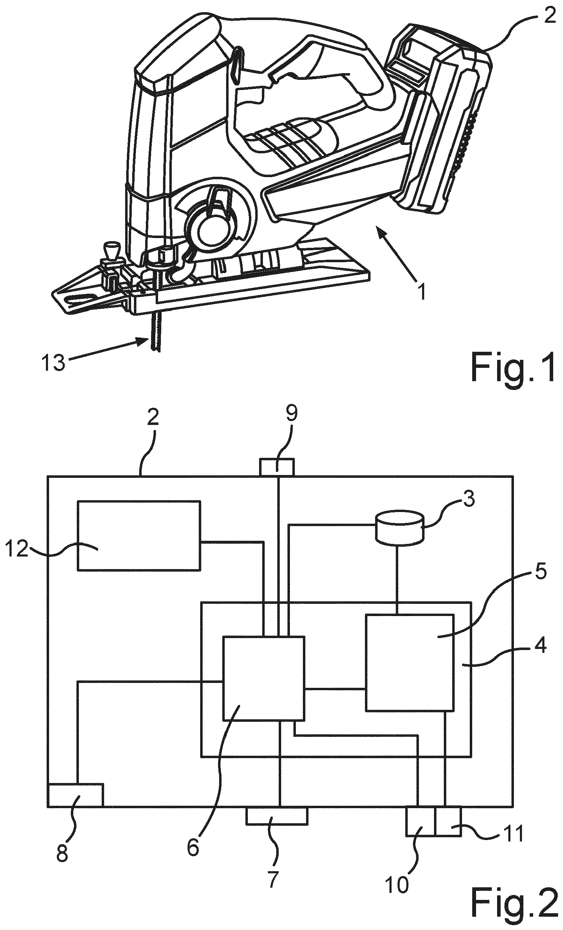

Fig. 1 zeigt schematisch eine beispielhafte Ausführungsform eines erfindungsgemäßen Systems mit einem Elektrogerät 1, das im vorliegenden Beispiel als Elektrowerkzeug ausgestaltet ist, insbesondere als Stichsäge. Das System ist dazu eingerichtet, ein erfindungsgemäßes Verfahren zur automatischen Verschleißüberwachung eines Verschleißteils 13 eines Elektrogeräts 1, im Falle einer Stichsäge beispielsweise eines Sägeblatts, durchzuführen.

Das Elektrogerät 1 weist wenigstens eine Recheneinheit 4 auf. Optional weist das System eine externe Recheneinheit (nicht dargestellt) auf, die mit dem Elektrogerät 1 beziehungsweise der wenigstens einen Recheneinheit 4 des Elektrogeräts 1 über eine Kommunikationsschnittstelle 8 des Elektrogeräts 1 drahtlos kommunizieren kann.

Die wenigstens eine Recheneinheit 4 kann Teil eines Akkupacks 2 zur Energieversorgung des Elektrogeräts 1 sein, wie in Fig. 2 dargestellt, oder extern zu dem Akkupack 2 im Gehäuse des Elektrogeräts 1 angeordnet sein. Das Akkupack kann über eine Schnittstelle 7 mit dem Gehäuse des Elektrogeräts 1 elektrisch und/oder mechanisch verbunden werden. In anderen Ausführungsformen ist wenigstens eine Recheneinheit 4 teilweise im Akkupack 2 angeordnet. Die wenigstens eine Recheneinheit 4 kann zum Beispiel einen Mikrocontroller und/oder sonstige Steuerungen enthalten und/oder einen Batteriemanagementschaltkreis 6, der beispielsweise eine Stromabgabe von Akkumulatorzellen 12 des Akkupacks 2 steuern oder regeln kann.

Die wenigstens eine Recheneinheit 4 und/oder die externe Recheneinheit ist dazu eingerichtet, ein mittels des Elektrogeräts 1 und des Verschleißteils 13 auszuführendes Projekt oder einen Projektschritt des Projekts zu identifizieren und ein Verschleißmodell abhängig von dem identifizierten Projekt oder Projektschritt aus einer Vielzahl vorgegebener Verschleißmodelle auszuwählen. Die Vielzahl von Verschleißmodellen ist dazu beispielsweise auf einem Datenspeicher 3 des Elektrogeräts 1 oder der externen Recheneinheit gespeichert.

Um das Projekt oder den Projektschritt zu identifizieren, kann beispielsweise ein Benutzer mit dem Akkupack 2 oder einem sonstigen Teil des Elektrogeräts 1 über ein entsprechendes Eingabegerät interagieren. Beispielsweise kann das Eingabegerät ein Mikrofon 10 umfassen, sodass der Benutzer die Benutzereingabe durch einen entsprechenden Sprachbefehl tätigen kann. Die wenigstens eine Recheneinheit 4 kann einen Sprachprozessor 5 enthalten, um den Sprachbefehl entsprechend zu verarbeiten.

Alternativ oder zusätzlich kann das Eingabegerät einen mechanischen Taster 9 aufweisen, den der Benutzer betätigen kann, um das Projekt oder den Projektschritt zu bestimmen. Alternativ oder zusätzlich zu dem Taster 9 kann auch ein sonstiger mechanischer Schalter oder eine berührungsempfindliche Fläche oder dergleichen vorgesehen werden.

Eine alternative Möglichkeit zum Identifizieren des Projekts oder Projektschritts besteht darin, dass der Benutzer die Benutzereingabe über ein externes elektronisches Gerät (nicht gezeigt), beispielsweise ein Smartphone, tätigt und das externe elektronische Gerät ein entsprechendes Signal drahtlos über die Kommunikationsschnittstelle 8 der wenigstens einen Recheneinheit 4 zur Verfügung stellt.

Die wenigstens eine Recheneinheit 4 kann den Datenspeicher 3 lesen, um das dem Projekt oder Projektschritt zugeordnete Verschleißmodell zu bestimmen. Alternativ kann die externe Recheneinheit das Verschleißmodell an die wenigstens eine Recheneinheit 4 übermitteln.

Das Elektrogerät 1 weist wenigstens einen Sensor (nicht dargestellt) auf, beispielsweise wenigstens einen Stromsensor und/oder wenigstens einen Stromsensor, um wenigstens eine vorgegebene Betriebskenngröße des Elektrogeräts 1 zu bestimmen, etwa eine Stromaufnahme oder eine sonstige Größe betreffend einen Betriebsstrom, eine Betriebsspannung und/oder eine Leistungsaufnahme. Die wenigstens eine Recheneinheit 4 ist dazu eingerichtet, abhängig von der bestimmten wenigstens einen Betriebskenngröße und dem ausgewählten Verschleißmodell einen aktuellen Verschleißgrad und/oder eine voraussichtliche Restlebensdauer des Verschleißteils 13 zu bestimmen.

In manchen Ausführungsformen weist das Akkupack 2, insbesondere die wenigstens eine Recheneinheit 4, einen Sprachsyntheseschaltkreis (nicht gezeigt) auf, der dazu eingerichtet ist, für einen vorgegebenen Projektschritt oder ein Projekt einen zugehörigen Benutzertext aus dem Datenspeicher 3 auszulesen und basierend auf dem Benutzertext ein entsprechendes Audiosignal mittels eines bekannten Sprachsyntheseverfahrens zu erzeugen und einem Lautsprecher 11 des Akkupacks 2 bereitzustellen. Der Lautsprecher 11 erhält das Audiosignal und kann dann basierend auf dem Audiosignal eine Sprachausgabe an einen Benutzer des Elektrogeräts erzeugen, um diesen bei der Durchführung des Projekts zu unterstützen, insbesondere um dem Benutzer Informationen betreffend den Projektschritt zur Verfügung zu stellen. Auf diese Weise kann der Benutzer durch entsprechende Sprachausgaben Schritt für Schritt durch die einzelnen Projektschritte geleitet werden.

Die Erfindung ermöglicht also wie beschrieben eine automatisierte und projektabhängige Verschleißüberwachung eines Verschleißteils eines Elektrogeräts. Beispielsweise kann somit entlang des Projektfortschritts stets das optimale oder passende Verschleißmodell automatisch vorgehalten werden, um den Verschleißgrad und/oder die voraussichtliche Restlebensdauer abzuschätzen und den Benutzer gegebenenfalls darüber zu informieren.

Die Projektabhängigkeit wird dabei insbesondere durch die verschiedenen Verschleißmodelle, gegebenenfalls inklusive entsprechender Schwellwerte oder sonstiger Kriterien für einen maximal akzeptablen Verschleiß, für verschiedene Elektrogeräte und/oder Verschleißteile abgebildet. Je nach Projekt können verschiedene Elektrogeräte, etwa Elektrowerkzeuge wie Schrauber, Sägen oder Fräsen, und/oder verschiedene Verschleißteile, etwa Schraubbits, Bohrer, Sägeblätter, und so weiter benötigt werden. Je nachdem welches Projekt durchgeführt werden soll oder je nachdem, welcher Projektschritt gerade ansteht, werden unterschiedliche Verschleißmodelle ausgewählt.

In verschiedenen Ausführungsformen kann das für ein bestimmtes Projekt oder einen bestimmten Projektschritt benötigte Verschleißmodell von einem Cloudrechner an das Elektrogerät, insbesondere ein Akkupack des Elektrogeräts, übertragen und dort lokal gespeichert werden. Im Betrieb des Elektrogeräts können charakteristische Größen durch das Elektrogerät überwacht und in das jeweilige Modell eingespeist werden. Dies können beispielsweise Parameter sein, die eine Stromaufnahme, Stromripples, eine Stromkennlinie, eine Leistungsaufnahme, Leistungsripples, einen Spannungsabfall, Spannungsripples und/oder eine Arbeits- oder Bearbeitungszeit für einen Bearbeitungsvorgang beschreiben oder quantifizieren. Bei bestimmten Verschleißteilen, beispielsweise Schraubbits, treten Maxima der Ripples beispielsweise periodisch oder wiederholt auf. Die zwischen den Maxima liegende Zeit kann, je nach Getriebekonfiguration, aus der Motordrehzahl oder einem Vielfachen davon abgeleitet werden.

Wird in verschiedenen Ausführungsformen gemäß dem Modell ein bestimmter Verschleißgrad überschritten oder eine bestimmte Restlebensdauer unterschritten, so kann eine bestimmte Aktion eingeleitet werden, zum Beispiel durch Ausgabe einer haptischen, visuellen und/oder akustischen Rückmeldung, eine Nachricht auf einem Smartphone oder die Sperrung des Geräts, sodass ein weiterer Betrieb nur durch ausdrückliche Entsperrung durch Benutzer möglich ist.

### BEZUGSZEICHENLISTE:

- 1: Elektrogerät
- 2: Akkupack
- 3: Datenspeicher
- 4: Recheneinheit
- 5: Sprachprozessor
- 6: Batteriemanagementschaltkreis
- 7: Schnittstelle
- 8: Kommunikationsschnittstelle
- 9: Taster
- 10: Mikrofon
- 11: Lautsprecher
- 12: Akkumulatorzellen
- 13: Verschleißteil

## Patentansprüche

1. Verfahren zur automatischen Verschleißüberwachung eines Verschleißteils (13) eines Elektrogeräts (1), wobei
- ein mittels des Elektrogeräts (1) wenigstens teilweise auszuführendes Projekt oder ein Projektschritt des Projekts identifiziert wird;
- ein Verschleißmodell abhängig von dem identifizierten Projekt oder Projektschritt aus einer Vielzahl vorgegebener Verschleißmodelle ausgewählt wird;
- mittels wenigstens eines Sensors des Elektrogeräts (1) wenigstens eine vorgegebene Betriebskenngröße des Elektrogeräts (1) bestimmt wird;
- mittels wenigstens einer Recheneinheit (4) des Elektrogeräts (1) abhängig von der bestimmten wenigstens einen Betriebskenngröße und dem ausgewählten Verschleißmodell ein aktueller Verschleißgrad und/oder eine voraussichtliche Restlebensdauer des Verschleißteils (13) bestimmt wird.

2. Verfahren nach Anspruch 1, wobei die Vielzahl vorgegebener Verschleißmodelle auf einem Speicherelement (3) des Elektrogeräts (1) gespeichert werden und das Verschleißmodell mittels der wenigstens einen Recheneinheit (4) des Elektrogeräts (1) abhängig von dem identifizierten Projekt oder Projektschritt aus der gespeicherten Vielzahl vorgegebener Verschleißmodelle ausgewählt wird.

3. Verfahren nach Anspruch 1, wobei
- das Verschleißmodell von einer externen Recheneinheit abhängig von dem identifizierten Projekt oder Projektschritt aus der gespeicherten Vielzahl vorgegebener Verschleißmodelle ausgewählt wird; und
- das ausgewählte Verschleißmodell von der externen Recheneinheit an die wenigstens eine Recheneinheit (4) des Elektrogeräts (1) übermittelt und auf einem Speicherelement (3) des Elektrogeräts (1) gespeichert wird.

4. Verfahren nach einem der vorhergehenden Ansprüche, wobei abhängig von dem identifizierten Projekt oder Projektschritt
- das Verschleißteil (13) und/oder eine Eigenschaft des Verschleißteils (13) bestimmt wird und das Verschleißmodell abhängig von dem bestimmten Verschleißteil (13) und/oder der bestimmten Eigenschaft ausgewählt wird; und/oder
- ein erwarteter Betriebsparameter des Elektrogeräts (1) bei der Durchführung des identifizierten Projekts oder Projektschritts bestimmt wird und das Verschleißmodell abhängig von dem bestimmten erwarteten Betriebsparameter ausgewählt wird; und/oder
- ein zu bearbeitendes Material und/oder ein Materialparameter des zu bearbeitenden Materials bestimmt wird und das Verschleißmodell abhängig von dem bestimmten Material und/oder dem bestimmten Materialparameter ausgewählt wird.

5. Verfahren nach einem der vorhergehenden Ansprüche, wobei abhängig von dem aktuellen Verschleißgrad und/oder der voraussichtlichen Restlebensdauer mittels einer Ausgabeeinheit des Elektrogeräts (1) ein akustischer, visueller und/oder haptischer Hinweis an einen Benutzer ausgegeben wird.

6. Verfahren nach einem der vorhergehenden Ansprüche, wobei abhängig von dem aktuellen Verschleißgrad und/oder der voraussichtlichen Restlebensdauer eine Funktion des Elektrogeräts (1) automatisch deaktiviert oder eingeschränkt wird.

7. Verfahren nach einem der vorhergehenden Ansprüche, wobei die Betriebskenngröße einen Betriebsstrom, eine Betriebsspannung, eine Leistungsabgabe einer Energiequelle des Elektrogeräts (1) und/oder eine Energiemenge, welche zur Durchführung des Projektschritts von der Energiequelle abgegeben wurde, betreffen.

8. Verfahren nach einem der vorhergehenden Ansprüche wobei eine Benutzereingabe erfasst wird und das Projekt oder der Projektschritt zumindest teilweise abhängig von der Benutzereingabe identifiziert wird.

9. Verfahren nach Anspruch 8, wobei zum Erfassen der Benutzereingabe eine Benutzerinteraktion mit einem Eingabegerät (9, 10) des Elektrogeräts (1) detektiert wird.

10. Verfahren nach einem der vorhergehenden Ansprüche, wobei ein Betriebsstrom des Elektrogeräts (1) und/oder eine Betriebsspannung des Elektrogeräts (1) und/oder eine Leistungsabgabe einer Energiequelle (12) des Elektrogeräts (1) überwacht wird und das Projekt oder der Projektschritt zumindest teilweise abhängig von einem Ergebnis der Überwachung identifiziert wird.

11. Verfahren nach einem der vorhergehenden Ansprüche, wobei von der wenigstens einen Recheneinheit (4) eine Statusinformation mittels drahtloser Kommunikation erhalten wird und das Projekt oder der Projektschritt zumindest teilweise abhängig von der Statusinformation identifiziert wird.

12. System zur automatischen Verschleißüberwachung eines Verschleißteils (13) für ein Elektrogerät (1), wobei
- das System wenigstens eine Recheneinheit (4) aufweist, die dazu eingerichtet ist, ein mittels des Elektrogeräts (1) und des Verschleißteils (13) auszuführendes Projekt oder einen Projektschritt des Projekts zu identifizieren und ein Verschleißmodell abhängig von dem identifizierten Projekt oder Projektschritt aus einer Vielzahl vorgegebener Verschleißmodelle auszuwählen;
- das System das Elektrogerät (1) enthält und das Elektrogerät (1) wenigstens einen Sensor zum Bestimmen wenigstens einer vorgegebenen Betriebskenngröße des Elektrogeräts (1) aufweist;
- die wenigstens eine Recheneinheit (4) dazu eingerichtet ist, abhängig von der wenigstens einen bestimmten Betriebskenngröße und dem ausgewählten Verschleißmodell einen aktuellen Verschleißgrad und/oder eine voraussichtliche Restlebensdauer des Verschleißteils (13) zu bestimmen.

13. System nach Anspruch 12, wobei
- das Elektrogerät (1) ein Speicherelement (3) aufweist, das die Vielzahl vorgegebener Verschleißmodelle speichert; und
- das Elektrogerät (1) die wenigstens eine Recheneinheit (4) aufweist.

14. System nach Anspruch 12, wobei
- das System eine externe Recheneinheit aufweist, die dazu eingerichtet ist, das Verschleißmodell abhängig von dem identifizierten Projekt oder Projektschritt aus der gespeicherten Vielzahl vorgegebener Verschleißmodelle auszuwählen; und
- die externe Recheneinheit, dazu eingerichtet ist, das ausgewählte Verschleißmodell an wenigstens eine Recheneinheit (4) des Elektrogeräts (1) zu übermitteln und die wenigstens eine Recheneinheit (4) des Elektrogeräts (1) dazu eingerichtet ist, das übermittelte ausgewählte Verschleißmodell auf einem Speicherelement (3) des Elektrogeräts (1) zu speichern.
